# EUROPÄISCHE PATENTSCHRIFT

(11) **EP 3 217 623 B1**
(45) Veröffentlichungstag und Bekanntmachung des Hinweises auf die Patenterteilung: **04.07.2018**
(21) Anmeldenummer: 16159902.2
(22) Anmeldetag: 11.03.2016
(51) Int. Cl.: H04L 29/06, G06F 21/30, H04L 29/08, G06F 21/10, G06F 21/62

(54) **VERFAHREN UND SYSTEM ZUM VERTEILEN EINES BETRIEBSSYSTEMS AUF MINDESTENS EINER NETZWERKBASIERTEN RECHNERINFRASTRUKTUR**
METHOD AND SYSTEM FOR ALLOCATING AN OPERATING SYSTEM ON AT LEAST ONE NETWORK-BASED COMPUTER INFRASTRUCTURE
PROCEDE ET SYSTEME DESTINE A REPARTIR UN SYSTEME DE FONCTIONNEMENT SUR AU MOINS UNE INFRASTRUCTURE INFORMATIQUE EN RESEAU

(43) Veröffentlichungstag der Anmeldung: 13.09.2017
(73) Patentinhaber: Deutsche Telekom AG, 53113 Bonn (DE)
(72) Erfinder: EISENREICH, Andreas, 82216 Gernlinden (DE); MORITZ, Michael, 16552 Schildow (DE); MÄCKE, Tjado, 22049 Hamburg (DE)
(74) Vertreter: Vossius & Partner Patentanwälte Rechtsanwälte mbB

(56) Entgegenhaltungen:
- WO-A1-2008/122505
- US-A- 6 026 366
- US-A1- 2005 235 282
- US-A1- 2008 276 301
- US-A1- 2014 189 675

## Beschreibung

Die Erfindung betrifft ein Verfahren und ein System sowie ein Computerprogrammprodukt zum Verteilen und späteren Betrieb eines Betriebssystems auf mindestens einer netzwerkbasierten Rechnerinfrastruktur.

Insbesondere betrifft die Erfindung ein Verfahren zur Erweiterung beliebiger IT(-Cloud) Umgebungen um einen homogenisierten Betriebssystem Betrieb, dessen Schnittstellen und aller dazu notwendigen Prozesse, Systeme und Services.

Darüber betrifft die Erfindung auch ein Verfahren zur Erweiterung beliebiger IT(-Cloud) Umgebungen um einen homogenisierten Betriebssystem Betrieb, dessen Schnittstellen und aller dazu notwendigen Prozesse, Systeme und Services sowie der Nutzung weiterer Cloud-Services wie beispielsweise Storage, Computer oder Netzwerkbandbreite.

Speziell in hybriden Applikationsarchitekturen steigen die Aufwände zur Integration von Anwendungskomponenten und führen, je nach Entwicklungsstand bzw. initialen Entwicklungsauftrag, zu einer Reduktion der Dynamik der betreffenden Applikationslandschaft.

Applikations-Container bieten einen Abstraktionslayer zwischen Cloud-Plattform und Applikation. Beispiele für solche Applikations-Container finden sich in den Referenzen [1] bis [3]. Neben verfahrensbedingten zusätzlichen Integrations- und Migrationsaufwänden etablieren diese Verfahren einen zusätzlichen Virtualisierungslayer.

Nachteile der etablierten Verfahren sind speziell in hybriden Applikationarchitekturen hohe Aufwände zur Integration einzelner Anwendungskomponenten, die je nach Entwicklungsstand bzw. Entwicklungsauftrag zu einer Reduktion der Dynamik der betreffenden Applikationslandschaft führen. Beispiele für hybriden Applikationarchitekturen finden sich in den Referenzen [4] und [5].

Bei Migrationen von bereits betriebenen Services in diese Modelle, steigt durch einen zusätzlichen Virtualisierungslayer die Komplexität, das Sicherheitsrisiko, Betriebsrisiken im Allgemeinen, sowie deren Betriebskosten.

US 2005/0235282 A1 betrifft einen Software Downloader, durch den Software auf ein Client System von einer Vielzahl von Softwareanbietern heruntergeladen und installiert werden kann. Ferner offenbart die D1, dass auch ein Betriebssystem durch diesen Software Downloader entsprechend distribuiert werden kann (siehe Absatz [0052]).

US 2008/0276301 A1 betrifft ein netzwerkbasiertes Installationsmanagementsystem, das dynamisch die sichere Softwareinstallation auf einem Client verwaltet.

US 2014/0189675 A1 betrifft ein Verfahren zur Deinstallation von Software.

Die Erfindung geht dabei von dem Grundgedanken aus, alle Deployment Methoden für Betriebssysteme zu unterstützen, d.h. alle Prozesse zur Installation, wobei am Ende jedes Deployment-Prozesses eine vollständig standardisierte und integrierte Betriebssysteminstanz erzeugt wird.

Ein weiterer Grundgedanke der vorliegenden Erfindung ist es, diesen Prozess durch die Integration ihrer Funktionalität in den Standard Bootprozess der jeweiligen Betriebssysteme wie beispielsweise SystemV, SystemD, SCM oder beliebige andere Systeme zu integrieren. Darüber hinaus kann ein Deployment auch manuell nach erfolgreichem Boot einer Instanz angestoßen werden.

Ein Vorteil der vorliegenden Erfindung ist, unter anderem, dass der Lebenszyklus (englisch: Lifecycle) des Betriebssystems von dem Kunden selber bestimmt werden kann und nicht zwingend durch den Provider vorgegeben wird bzw. vorgegeben werden muss.

Der Erfindung liegt die Aufgabe zugrunde ein Verfahren und ein System sowie ein Computerprogrammprodukt zum Verteilen und Betreiben eines Betriebssystems auf mindestens einer netzwerkbasierten Rechnerinfrastruktur bereitzustellen.

Diese Aufgabe wird mit einem System und einem Verfahren gemäß den unabhängigen Patentansprüchen gelöst.

Die Erfindung betrifft eine Verfahren zum Verteilen mindestens eines Betriebssystems auf mindestens einer netzwerkbasierten Rechnerinfrastruktur mit den folgenden Schritten: Herstellen einer gesicherten Netzwerkverbindung von mindestens einer zu installierenden Instanz des mindestens einen Betriebssystems zu mindestens einem Server; Authentifizieren der mindestens einen zu installierenden Instanz des Betriebssystems an dem mindestens einen Betriebssystems notwendigen Komponenten unter Berücksichtigung der mindestens einen netzwerkbasierten Rechnerinfrastruktur; Installieren der zum Betrieb der mindestens einen zu installierenden Instanz des mindestens einen Betriebssystems notwendigen Komponenten auf der mindestens einen netzwerkbasierten Rechnerinfrastruktur; und Authentifizieren der auf der mindestens einen netzwerkbasierten Rechnerinfrastruktur installierten mindestens einen Instanz des mindestens einen Betriebssystems an dem mindestens einen Server. Vorzugsweise werden die vorstehend genannten Schritte in der vorstehend genannten Reihenfolge ausgeführt.

Vorzugsweise gehört der mindestens eine Server einem Provider.

Vorzugsweise weist der mindestens eine Server eine Management Struktur auf, die einen externen und einen interne Bereich aufweist. Vorzugsweise wird die in dem Schritt des Authentifizierens der mindestens einen zu installierenden Instanz des Betriebssystems an dem mindestens einen Server des Providers die mindestens eine zu installierende Instanz des mindestens einen Betriebssystems an dem externen Bereich authentifiziert. Vorzugsweise wird in dem Schritt des Authentifizierens der mindestens einen netzwerkbasierten Rechnerinfrastruktur installierten mindestens einen Instanz an dem mindestens einen Server die auf der mindestens einen netzwerkbasierten Rechnerinfrastruktur mindestens eine installierte Instanz an dem internen Bereich authentifiziert.

Vorzugsweise generiert der externe Bereich einen Schlüssel. Vorzugsweise sendet der externe Bereich den Schlüssel an die mindestens eine installierte Instanz des mindestens einen Betriebssystems oder den Nutzer der mindestens einen installierten Instanz des mindestens einen Betriebssystems. Vorzugsweise wird die mindestens eine installierte Instanz des mindestens einen Betriebssystems mithilfe des Schlüssels an dem internen Bereich authentifiziert. Vorzugsweise erfolgt das Generieren, und das Senden vor dem Schritt des Authentifizierens der auf der mindestens einen netzwerkbasierten Rechnerinfrastruktur installierten mindestens einen Instanz an dem mindestens einen Server.

Vorzugsweise werden die zum Betrieb der mindestens einen Instanz des mindestens einen Betriebssystems notwendigen Komponenten durch den mindestens einen Server bereitgestellt.

Vorzugsweise findet das Bestimmen der zum Betrieb der mindestens einen Instanz des mindestens einen Betriebssystems notwendigen Komponenten unter Berücksichtigung der mindestens einen netzwerkbasierten Rechnerinfrastruktur durch den mindestens einen Server statt.

Vorzugsweise findet das Bestimmen der zum Betrieb der mindestens einen Instanz des mindestens einen Betriebssystems notwendigen Komponenten unter Berücksichtigung der mindestens einen netzwerkbasierten Rechnerinfrastruktur durch die zu installierende Instanz statt.

Vorzugsweise werden die zum Betrieb der mindestens einen Instanz des mindestens einen Betriebssystems notwendigen Komponenten unter Berücksichtigung der mindestens einen netzwerkbasierten Rechnerinfrastruktur durch den mindestens einen Server bereitgestellt.

Vorzugsweise überprüft der mindestens eine Server die Integrität der mindestens einen installierten Instanz des mindestens einen Betriebssystems. Vorzugsweise erfolgt dies nach dem Schritt des Installierens der zum Betrieb der mindestens einen zu installierenden Instanz des mindestens einen Betriebssystems notwendigen Komponenten auf der mindestens einen netzwerkbasierten Rechnerinfrastruktur und vorzugsweise vor dem Schritt des Authentifizierens der auf der mindestens einen netzwerkbasierten Rechnerinfrastruktur installierten mindestens einen Instanz des mindestens einen Betriebssystems an dem mindestens einen Server.

Vorzugsweise überprüft der mindestens eine Server die Betreibbarkeit der mindestens einen installierten Instanz des mindestens einen Betriebssystems bezüglich vorbestimmter Betriebsstandards, Qualitätsstandards und/oder Sicherheitsstandards. Vorzugsweise führt der mindestens eine Server, bei Feststellung, dass einer oder mehrere der vorgenannten Standards nicht eingehalten wird, notwendige Updates an der mindestens einen Instanz des mindestens einen Betriebssystems durch. Vorzugsweise installiert der mindestens eine Server fehlende Komponenten der mindestens einen Instanz des mindestens einen Betriebssystems nach, bei Feststellung, dass einer oder mehrere der vorgenannten Standards nicht eingehalten wird. Vorzugsweise erfolgt die Überprüfung und/oder die Nachinstallation nach dem Schritt des Installierens der zum Betrieb der mindestens einen zu installierenden Instanz des mindestens einen Betriebssystems notwendigen Komponenten auf der mindestens einen netzwerkbasierten Rechnerinfrastruktur und vorzugsweise vor dem Schritt des Authentifizierens der auf der mindestens einen netzwerkbasierten Rechnerinfrastruktur installierten mindestens einen Instanz des mindestens einen Betriebssystems an dem mindestens einen Server.

Vorzugsweise stellt der mindestens eine Server mindestens eine Verknüpfung zwischen den Informationen über die Authentifizierung der mindestens einen installierten Instanz des mindestens einen Betriebssystems und den Informationen über den Kunden und/oder den Vertrag des Kunden her.

Vorzugsweise weist die mindestens eine netzwerkbasierte Rechnerinfrastruktur eine hybride Applikationsarchitektur auf. Vorzugsweise sind einzelne Rechner der mindestens einen netzwerkbasierten Rechnerinfrastruktur über ein Weitverkehrsnetz und/oder das Internet miteinander verbunden. Vorzugsweise ist die mindestens eine netzwerkbasierte Rechnerinfrastruktur eine Cloud-Plattform. Vorzugsweise weist die mindestens eine netzwerkbasierte Rechnerinfrastruktur mindestens eine Cloud-Plattform auf. Vorzugsweise weist die mindestens eine netzwerkbasierte Rechnerinfrastruktur mehrere Cloud-Plattformen auf. Vorzugsweise weisen die mehreren Cloud-Plattformen unterschiedliche Infrastrukturen auf.

Mit anderen Worten weist die mindestens eine netzwerkbasierte Rechnerinfrastruktur vorzugsweise mehrere Rechner auf, die zu einer Rechnerwolke verbunden sind. Eine erfindungsgemäße Definition von "Cloud" bzw. "Cloud Computing" findet sich beispielsweise in Referenz [6]. Vorzugsweise weist die Cloud eine hybride Applikationsarchitektur auf.

Die Erfindung betrifft auch ein Computerprogrammprodukt, das direkt in den internen Speicher eines digitalen Rechners geladen werden kann und Softwarecodeabschnitte umfasst, mit denen die Schritte gemäß einem der vorstehend genannten Verfahren ausgeführt werden, wenn das Produkt auf einem Rechner läuft.

Die Erfindung betrifft auch ein System zum Verteilen eines Betriebssystems auf mindestens einer netzwerkbasierten Rechnerinfrastruktur mit:
einer ersten Vorrichtung zum Herstellen einer gesicherten Netzwerkverbindung von mindestens einer zu installierenden Instanz des mindestens einen Betriebssystems zu mindestens einem Server eines Providers;
einer zweiten Vorrichtung zum Authentifizieren der mindestens einen zu installierenden Instanz des Betriebssystems an dem mindestens einen Server des Providers;
einer dritten Vorrichtung zum Bestimmen der zum Betrieb der mindestens einen Instanz des mindestens einen Betriebssystems notwendigen Komponenten unter Berücksichtigung der mindestens einen netzwerkbasierten Rechnerinfrastruktur;
einer vierten Vorrichtung zum Installieren der zum Betrieb der mindestens einen zu installierenden Instanz des mindestens einen Betriebssystems notwendigen Komponenten auf der mindestens einen netzwerkbasierten Rechnerinfrastruktur; und
einer fünften Vorrichtung zum Authentifizieren der auf der mindestens einen netzwerkbasierten Rechnerinfrastruktur installierten mindestens einen Instanz des mindestens einen Betriebssystems an dem mindestens einen Server.

Vorzugsweise ist das System zur Ausführung eines der vorstehend genannten Verfahren geeignet.

Vorzugsweise weist das System den mindestens einen Server auf.

Vorzugsweise weist der mindestens eine Server eine Management Struktur auf, die einen externen Bereich und einen internen Bereich aufweist. Vorzugsweise ist der externe Bereich geeignet, die mindestens eine zu installierende Instanz des mindestens einen Betriebssystems zu authentifizieren. Vorzugsweise ist der interne Bereich geeignet, die mindestens eine installierte Instanz des Betriebssystems zu authentifizieren.

Vorzugsweise wird die Konfiguration der installierten Instanz bei jedem Bootprozess geprüft und dem Stand einer zentralen Konfiguration, beispielsweise durch den Provider vorgegeben, angepasst.

Die Erfindung wird nachstehend anhand von Beispielen und Zeichnungen näher erläutert.

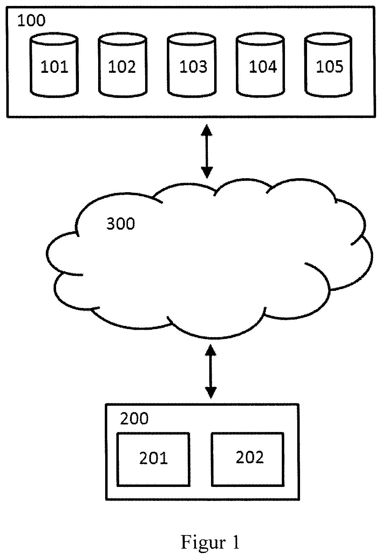

Es zeigt Figur 1 eine schematische Zeichnung eines Systems zum Verteilen eines Betriebssystems auf mindestens einer netzwerkbasierten Rechnerinfrastruktur gemäß einer Ausführungsform der vorliegenden Erfindung.

Figur 1 zeigt eine schematische Zeichnung eines Systems zum Verteilen eines Betriebssystems auf mindestens einer netzwerkbasierten Rechnerinfrastruktur 100. Die netzwerkbasierte Rechnerinfrastruktur 100 weist mehrere Cloud-Plattformen 101-105 auf, deren Infrastrukturen gemäß dieser Ausführungsform der vorliegenden Erfindung unterschiedlich sind.

Durch den Kunden der netzwerkbasierten Rechnerinfrastruktur 100 wird, beispielsweise durch das Ausführen eines entsprechenden Computerprogrammprodukts, die Installation einer Instanz des gewünschten Betriebssystems auf den Cloud-Plattformen 101-105 gestartet.

Anschließend wird eine gesicherte Netzwerkverbindung, gemäß der vorliegenden Ausführungsform eine VPN Verbindung, von der zu installierenden Instanz zu dem Server des Providers 200 eines Providers über das Internet 300 hergestellt.

Die zu installierende Instanz wird an einem externen Bereich 201 einer Management Struktur des Servers des Providers 200 authentifiziert. Die Management Struktur ist dabei vorzugsweise ein Teil des Servers, in dem Kontroll- und Verwaltungsaufgaben ausgeführt werden. Vorzugsweise erfolgt die Authentifizierung durch kryptografische Verfahren, wie beispielsweise die Verwendung von mindestens einem SSL- Zertifikat, GPG-Schlüsseln, und/oder die Verwendung eine Kombination aus Benutzername und Passwort.

Anschließend analysiert die zu installierende Instanz die netzwerkbasierte Rechnerinfrastruktur 100 sowie die zugehörigen Cloud-Plattformen 101-105 und bestimmt die zum Betrieb notwendigen zusätzlichen spezifischen Komponenten des Betriebssystems. Dabei wird, beispielsweise festgestellt, welche Anpassungen an der Instanz notwendig sind, wie beispielsweise die Installation spezieller Treiber, Tools, Anwendungen oder anderen Komponenten, um deren effizienten Betrieb auf der jeweiligen Plattform sicherzustellen. Die notwendigen Treiberpakete und/oder Werkzeuge, die zur Anpassung der Instanz notwendig sind, sind vorzugsweise in dem externen Bereich 201 und/oder der Instanz selber verfügbar.

In einem nächsten Schritt werden die zum Betrieb der Instanz benötigten Komponenten in der Instanz installiert.

Anschließend wird die Integrität der installierten Instanz überprüft. Dies erfolgt vorzugsweise durch den externen Bereich201, die vorzugsweise die dafür benötigten Daten und Werkzeuge aufweist.

In einem nächsten Schritt erzeugt der externe Bereich 201 einen kryptografischen Schlüssel, beispielsweise ein so genanntes "one-time Passwort", mit dem sich die installierte Instanz des Betriebssystems an einen internen Bereich 202 des Servers einmalig und innerhalb einer bestimmten Zeit authentifizieren kann. Vorzugsweise teilt der externe Bereich 201 der installierten Instanz zusätzlich noch eine Adresse zur Verbindung an den internen Bereich 202, beispielsweise eine IP-Adresse, mit.

Anschließend wird entweder serverseitig oder durch die installierte Instanz die gesicherte Verbindung, d.h. vorliegend die VPN Verbindung, zu dem externen Bereich201 getrennt.

Die installierte Instanz stellt anschließend mithilfe des durch den externen Bereich 201 bereitgestellten kryptografischen Schlüssels und gegebenenfalls unter Verwendung der ihr von dem externen Bereich 201 mitgeteilten Adresse eine gesicherte Verbindung, gemäß der vorliegenden Ausführungsform eine VPN Verbindung, dem internen Bereich 202 her. Die Authentifizierung erfolgt dabei mithilfe des kryptografischen Schlüssels, gemäß der vorliegenden Ausführungsform mithilfe des "one-time Passwort" und vorzugsweise muss die Authentifizierung innerhalb einer bestimmten, vorgegebenen Zeit erfolgen.

Gemäß der vorliegenden Ausführungsform stellt der interne Bereich 202 einen Bezug zwischen der erfolgten Authentifizierung der installierten Instanz und dem entsprechenden Kunden bzw. dessen Vertrag her und protokolliert somit den erfolgreichen Start der Instanz, beispielsweise für Rechnungszwecke oder Reporting Zwecke.

In einem anschließenden Schritt meldet der interne Bereich 202 gemäß der vorliegenden Ausführungsform die installierte Instanz an verschiedenen Backend-Services des Providers an, wie beispielsweise Monitoring, Indentity-Management, Reporting, Patch-Management, oder Logging-Service.

Mit der vorliegenden Erfindung ist der Kunde in der Lage, unter anderem durch die Bestimmung des Zeitpunktes des Startens der Installation, den Lebenszyklus der installierten Instanz selbst zu bestimmen. Vorzugsweise beginnt der Lebenszyklus mit der Authentifizierung an dem internen Bereich 202.

Erfindungsgemäß kann das Stoppen der Instanz wie dargelegt erfolgen:
1. ein in der Instanz des Betriebsystems initialisierter Prozess meldet dem internen Bereich 202 das Abschalten der Instanz; und
2. der interne Bereich 202 entfernt oder pausiert den jeweiligen Service, wie z.B. Monitoring, Configuration Management Database (CMDB), Reporting, Security-Monitoring für die Instanz.

Obwohl die Erfindung mittels der Figur und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in der Figur auch wenn sie dort im Zusammenhang mit anderen Merkmalen gezeigt sind und/oder vorstehend oder nachfolgend nicht genannt sind. Auch können die in der Figur und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

### Referenzliste:

[1] - Docker:https://www.docker.com/
[2] -Rocket:https://coreos.com/blog/rocket/
[3] - LXC:https://linuxcontainers.org/
[4] - https://azure.microsoft.com/en-us/documentation/articles/architecture-overview/
[5] - https://aws.amazon.com/architecture/
[6] - SP 800-145, The NIST Definition of Cloud Computing, SP 800-145, Sep. 2011; http://nvlpubs.nist.gov/nistpubs/Legacy/SP/nistspecialpublication800-145.pdf

## Patentansprüche

1. Verfahren zum Verteilen mindestens eines Betriebssystems auf mindestens einer netzwerkbasierten Rechnerinfrastruktur (100) mit den folgenden Schritten, in der folgenden Reihenfolge:
a) Herstellen einer gesicherten Netzwerkverbindung von mindestens einer zu installierenden Instanz des mindestens einen Betriebssystems zu mindestens einem Server (200) eines Providers, wobei der mindestens eine Server (200) eine Management Struktur aufweist, die einen externen Bereich (201) und einen internen Bereich (202) aufweist;
b) Authentifizieren der mindestens einen zu installierenden Instanz des Betriebssystems an dem externen Bereich (201) des mindestens einen Servers (200) des Providers;
c) Bestimmen der zum Betrieb der mindestens einen Instanz des mindestens einen Betriebssystems notwendigen Komponenten unter Berücksichtigung der mindestens einen netzwerkbasierten Rechnerinfrastruktur (100);
d) Installieren der zum Betrieb der mindestens einen zu installierenden Instanz des mindestens einen Betriebssystems notwendigen Komponenten auf der mindestens einen netzwerkbasierten Rechnerinfrastruktur (100); und
e) Authentifizieren der auf der mindestens einen netzwerkbasierten Rechnerinfrastruktur (100) installierten mindestens einen Instanz des mindestens einen Betriebssystems an dem internen Bereich (202) des mindestens einen Servers (200).

2. Verfahren nach Anspruch 1, wobei der externe Bereich (201) vor Schritt e) einen Schlüssel generiert und an die mindestens eine installierte Instanz des mindestens einen Betriebssystems oder den Nutzer der mindestens einen installierten Instanz des mindestens einen Betriebssystems sendet und wobei die mindestens eine installierte Instanz des mindestens einen Betriebssystems mithilfe des Schlüssels an dem internen Bereich (202) authentifiziert wird.

3. Verfahren nach Anspruch 1 oder 2, wobei die zum Betrieb der mindestens einen Instanz des mindestens einen Betriebssystems notwendigen Komponenten durch den mindestens einen Server (200) bereitgestellt werden.

4. Verfahren nach einem der Ansprüche 1 bis 3, wobei das Bestimmen der zum Betrieb der mindestens einen Instanz des mindestens einen Betriebssystems notwendigen Komponenten unter Berücksichtigung der mindestens einen netzwerkbasierten Rechnerinfrastruktur (100) durch den mindestens einen Server (200) stattfindet.

5. Verfahren nach einem der Ansprüche 1 bis 4, wobei die zum Betrieb der mindestens einen Instanz des mindestens einen Betriebssystems notwendigen Komponenten unter Berücksichtigung der mindestens einen netzwerkbasierten Rechnerinfrastruktur (100) durch den mindestens einen Server (200) bereitgestellt werden.

6. Verfahren nach einem der Ansprüche 1 bis 5, wobei nach Schritt d) und vorzugsweise vor Schritt e) der mindestens eine Server (200) die Integrität der mindestens einen installierten Instanz des mindestens einen Betriebssystems überprüft.

7. Verfahren nach einem der Ansprüche 1 bis 6, wobei der mindestens eine Server (200) nach Schritt d) und vorzugsweise vor Schritt e) die Betreibbarkeit der mindestens einen installierten Instanz des mindestens einen Betriebssystems bezüglich vorbestimmter Betriebsstandards, Qualitätsstandards und/oder Sicherheitsstandards überprüft und wobei bei Feststellung, dass einer oder mehrere der vorgenannten Standards nicht eingehalten wird, der mindestens eine Server (200) notwendige Updates an der mindestens einen Instanz des mindestens einen Betriebssystems durchführt und/oder fehlende Komponenten der mindestens einen Instanz des mindestens einen Betriebssystems nachinstalliert.

8. Verfahren nach einem der Ansprüche 1 bis 7, wobei der mindestens eine Server (200) mindestens eine Verknüpfung zwischen den Informationen über die Authentifizierung der mindestens einen installierten Instanz des mindestens einen Betriebssystems und den Informationen über den Kunden und/oder den Vertrag des Kunden herstellt.

9. Verfahren nach einem der Ansprüche 1 bis 8, wobei die mindestens eine netzwerkbasierten Rechnerinfrastruktur (100) eine hybride Applikationsarchitektur aufweist.

10. Verfahren nach einem der Ansprüche 1 bis 9, wobei der Beginn des Lebenszyklus der mindestens einen installierten Instanz des mindestens einen Betriebssystems durch das Authentifizieren der mindestens einen installierten Instanz des mindestens einen Betriebssystems an dem mindestens einen Server (200) erfolgt.

11. System zum Verteilen eines Betriebssystems auf mindestens einer netzwerkbasierten Rechnerinfrastruktur (100) mit:
mindestens einem Server (200) eines Providers;
einer ersten Vorrichtung zum Herstellen einer gesicherten Netzwerkverbindung von mindestens einer zu installierenden Instanz des mindestens einen Betriebssystems zu dem mindestens einen Server (200) eines Providers, wobei der mindestens eine Server (200) eine Management Struktur aufweist, die einen externen Bereich (201) und einen internen Bereich (202) aufweist;
einer zweiten Vorrichtung zum Authentifizieren der mindestens einen zu installierenden Instanz des Betriebssystems an dem mindestens einen Server (200) des Providers, wobei der externe Bereich (201) geeignet ist, die mindestens eine zu installierende Instanz des mindestens einen Betriebssystems zu authentifizieren;
einer dritten Vorrichtung zum Bestimmen der zum Betrieb der mindestens einen Instanz des mindestens einen Betriebssystems notwendigen Komponenten unter Berücksichtigung der mindestens einen netzwerkbasierten Rechnerinfrastruktur (100);
einer vierten Vorrichtung zum Installieren der zum Betrieb der mindestens einen zu installierenden Instanz des mindestens einen Betriebssystems notwendigen Komponenten auf der mindestens einen netzwerkbasierten Rechnerinfrastruktur (100); und
einer fünften Vorrichtung zum Authentifizieren der auf der mindestens einen netzwerkbasierten Rechnerinfrastruktur (100) installierten mindestens einen Instanz des mindestens einen Betriebssystems an dem mindestens einen Server (200), wobei der interne Bereich (202) geeignet ist, die mindestens eine installierte Instanz des Betriebssystems zu authentifizieren.

12. Computerprogrammprodukt, das direkt in den internen Speicher eines digitalen Rechners geladen werden kann und Softwarecodeabschnitte umfasst, mit denen die Schritte gemäß einem der Ansprüche 1 bis 10 ausgeführt werden, wenn das Produkt auf einem Rechner läuft.

## Claims

1. Method for allocating at least one operating system on at least one network-based computer infrastructure (100), comprising the following steps in the following order:
a) establishing a secure network connection from at least one instance to be installed of the at least one operating system to at least one server (200) of a provider, wherein the at least one server (200) has a management structure having an external region (201) and an internal region (202);
b) authenticating the at least one instance to be installed of the operating system on the external region (201) of the at least one server (200) of the provider;
c) determining the components necessary for operating the at least one instance of the at least one operating system, taking into account the at least one network-based computer infrastructure (100);
d) installing the components necessary for operating the at least one instance to be installed of the at least one operating system on the at least one network-based computer infrastructure (100); and
e) authenticating the at least one instance of the at least one operating system, installed on the at least one network-based computer infrastructure (100), on the internal region (202) of the at least one server (200).

2. Method according to claim 1, wherein the external region (201) generates a key prior to step e) and sends it to the at least one installed instance of the at least one operating system or to the user of the at least one installed instance of the at least one operating system, and wherein the at least one installed instance of the at least one operating system is authenticated on the internal region (202) by means of the key.

3. Method according to claim 1 or 2, wherein the components necessary for operating the at least one instance of the at least one operating system are provided by the at least one server (200).

4. Method according to any one of claims 1 to 3, wherein the determination of the components necessary for operating the at least one instance of the at least one operating system is performed by the at least one server (200), taking into account the at least one network-based computer infrastructure (100).

5. Method according to any one of claims 1 to 4, wherein the components necessary for operating the at least one instance of the at least one operating system are provided by the at least one server (200), taking into account the at least one network-based computer infrastructure (100).

6. Method according to any one of claims 1 to 5, wherein, after step d) and preferably before step e), the at least one server (200) checks the integrity of the at least one installed instance of the at least one operating system.

7. Method according to any one of claims 1 to 6, wherein, after step d) and preferably before step e), the at least one server (200) checks the operability of the at least one installed instance of the at least one operating system with respect to pre-defined operating standards, quality standards and/or security standards, and wherein, upon determination that one or more of the aforementiond standards are not complied with, the at least one server (200) executes necessary updates on the at least one instance of the at least one operating system and/or installs missing components of the at least one instance of the at least one operating system.

8. Method according to any one of claims 1 to 7, wherein the at least one server (200) establishes at least one link between the information on the authentication of the at least one installed instance of the at least one operating system and the information on the customer and/or the customer agreement.

9. Method according to any one of claims 1 to 8, wherein the at least one network-based computer infrastructure (100) has a hybrid application architecture.

10. Method according to any one of claims 1 to 9, wherein the life cycle of the at least one installed instance of the at least one operating system begins with the authentication of the at least one installed instance of the least one operating system on the at least one server (200).

11. System for allocating an operating system on at least one network-based computer infrastructure (100) comprising:
at least one server (200) of a provider;
a first device for establishing a secure network connection from at least one instance to be installed of the at least one operating system to the at least one server (200) of a provider, wherein the at least one server (200) has a management structure having an external region (201) and an internal region (202);
a second device for authenticating the at least one instance to be installed of the operating system on the at least one server (200) of the provider, wherein the external region (201) is suitable for authenticating the at least one instance to be installed of the at least one operating system;
a third device for determining the components necessary for operating the at least one instance of the at least one operating system, taking into account the at least one network-based computer infrastructure (100);
a fourth device for installing the components necessary for operating the at least one instance to be installed of the at least one operating system on the at least one network-based computer infrastructure (100); and
a fifth device for authenticating the at least one instance of the at least one operating system, installed on the at least one network-based computer infrastructure (100), on the at least one server (200), wherein the internal region (202) is suitable for authenticating the at least one installed instance of the operating system.

12. Computer program product which can be loaded directly into the internal memory of a digital computer and comprises software code sections with which the steps according to any one of claims 1 to 10 are executed when the product runs on a computer.

## Revendications

1. Procédé de répartition d'au moins un système d'exploitation sur au moins une infrastructure informatique en réseau (100), comprenant les étapes suivantes dans l'ordre indiqué :
a) établissement d'une connexion réseau sécurisée d'au moins une instance à installer dudit au moins un système d'exploitation vers au moins un serveur (200) d'un fournisseur, ledit au moins un serveur (200) présentant une structure de gestion comprenant une zone externe (201) et une zone interne (202) ;
b) authentification de ladite au moins une instance à installer du système d'exploitation au niveau de la zone externe (201) dudit au moins un serveur (200) du fournisseur ;
c) détermination des composants exigés pour le fonctionnement de ladite au moins une instance dudit au moins un système d'exploitation en tenant compte de ladite au moins une infrastructure informatique en réseau (100) ;
d) installation des composants exigés pour le fonctionnement de ladite au moins une instance à installer dudit au moins un système d'exploitation sur ladite au moins une infrastructure informatique en réseau (100) ; et
e) authentification de ladite au moins une instance installée sur ladite au moins une infrastructure informatique en réseau (100) dudit au moins un système d'exploitation au niveau de la zone interne (202) dudit au moins un serveur (200).

2. Procédé selon la revendication 1, où la zone externe (201) génère un code avant l'étape e) et transmet celui-ci à ladite au moins une instance installée dudit au moins un système d'exploitation ou à l'utilisateur de ladite au moins une instance installée dudit au moins un système d'exploitation, et où ladite au moins une instance installée dudit au moins un système d'exploitation est authentifiée au moyen du code au niveau de la zone interne (202).

3. Procédé selon la revendication 1 ou la revendication 2, où les composants exigés pour le fonctionnement de ladite au moins une instance dudit au moins un système d'exploitation sont fournis par ledit au moins un serveur (200).

4. Procédé selon l'une des revendications 1 à 3, où la détermination des composants exigés pour le fonctionnement de ladite au moins une instance dudit au moins un système d'exploitation en tenant compte de ladite au moins une infrastructure informatique en réseau (100) est effectuée par ledit au moins un serveur (200).

5. Procédé selon l'une des revendications 1 à 4, où les composants exigés pour le fonctionnement de ladite au moins une instance dudit au moins un système d'exploitation en tenant compte de ladite au moins une infrastructure informatique en réseau (100) sont fournis par ledit au moins un serveur (200).

6. Procédé selon l'une des revendications 1 à 5, où, après l'étape d) et préférentiellement avant l'étape e), ledit au moins un serveur (200) contrôle l'intégrité de ladite au moins une instance installée dudit au moins un système d'exploitation.

7. Procédé selon l'une des revendications 1 à 6, où, après l'étape d) et préférentiellement avant l'étape e), ledit au moins un serveur (200) contrôle la fonctionnalité de ladite au moins une instance installée dudit au moins un système d'exploitation relativement à des normes d'exploitation, des normes de qualité et/ou des normes de sécurité définis, et où, en cas de constat qu'une ou plusieurs des normes susmentionnées ne sont pas satisfaites, ledit au moins un serveur (200) effectue les mises à jour exigées sur ladite au moins une instance dudit au moins un système d'exploitation et/ou installe les composants manquants de ladite au moins une instance dudit au moins un système d'exploitation.

8. Procédé selon l'une des revendications 1 à 7, où ledit au moins un serveur (200) établit au moins une liaison entre les informations relatives à l'authentification de ladite au moins une instance installée dudit au moins un système d'exploitation et les informations relatives au client et/ou au contrat du client.

9. Procédé selon l'une des revendications 1 à 8, où ladite au moins une infrastructure informatique en réseau (100) présente une architecture d'applications hybride.

10. Procédé selon l'une des revendications 1 à 9, où le cycle de vie de ladite au moins une instance installée dudit au moins un système d'exploitation est commencé par authentification de ladite au moins une instance installée dudit au moins un système d'exploitation au niveau dudit au moins un serveur (200).

11. System pour la répartition d'un système d'exploitation sur au moins une infrastructure informatique en réseau (100) avec :
au moins un serveur (200) d'un fournisseur ;
un premier dispositif pour l'établissement d'une connexion réseau sécurisée d'au moins une instance à installer dudit au moins un système d'exploitation vers ledit au moins un serveur (200) d'un fournisseur, ledit au moins un serveur (200) présentant une structure de gestion comprenant une zone externe (201) et une zone interne (202) ;
un deuxième dispositif pour l'authentification de ladite au moins une instance à installer du système d'exploitation au niveau dudit au moins un serveur (200) du fournisseur, la zone externe (201) étant prévue pour authentifier ladite au moins une instance à installer dudit au moins un système d'exploitation ;
un troisième dispositif pour la détermination des composants exigés pour le fonctionnement de ladite au moins une instance dudit au moins un système d'exploitation en tenant compte de ladite au moins une infrastructure informatique en réseau (100) ;
un quatrième dispositif pour l'installation des composants exigés pour le fonctionnement de ladite au moins une instance à installer dudit au moins un système d'exploitation sur ladite au moins une infrastructure informatique en réseau (100) ; et
un cinquième dispositif pour l'authentification de ladite au moins une instance dudit au moins un système d'exploitation installée sur ladite au moins une infrastructure informatique en réseau (100) au niveau dudit au moins un serveur (200), la zone interne (202) étant prévue pour authentifier ladite au moins une instance installée du système d'exploitation.

12. Produit de programme informatique pouvant être directement chargé dans la mémoire interne d'un calculateur numérique et comprenant des séquences de code-programme permettant d'exécuter les étapes selon l'une des revendications 1 à 10 quand le produit est utilisé sur un ordinateur.
